# FASCICULE DE BREVET EUROPEEN

(11) **EP 3 588 812 B1**
(45) Date de publication et mention de la délivrance du brevet: **04.08.2021**
(21) Numéro de dépôt: 19178771.2
(22) Date de dépôt: 06.06.2019
(51) Int. Cl.: H04B 17/15

(54) **PROCÉDÉ D'AUTOTEST D'UNE CHAINE DE RÉCEPTION RADIOFRÉQUENCE D'UN VÉHICULE AUTOMOBILE**
VERFAHREN ZUR AUTOTEST EINER FUNKFREQUENZ-EMPFANGSKETTE EINES KRAFTFAHRZEUGS
METHOD FOR AUTOTESTING A RADIO FREQUENCY RECEIVING CHAIN OF A VEHICLE

(30) Priorité: 21.06.2018 FR 1855510
(43) Date de publication de la demande: 01.01.2020
(73) Titulaire: PSA Automobiles SA, 78300 Poissy (FR)
(72) Inventeur: COMTE, RENAUD, 87000 LIMOGES (FR); GAULIN, DAVID, 70400 COUTHENANS (FR)

(56) Documents cités:
- US-A- 3 605 022
- US-A1- 2001 046 845
- US-A1- 2016 087 734

## Description

### Domaine Technique

La présente invention se rapporte de manière générale aux récepteurs radiofréquences à bord des véhicules automobiles, et plus particulièrement à un procédé d'autotest d'une chaîne de réception radiofréquence d'un véhicule automobile.

### Arrière-plan Technologique

Un poste de radio pour véhicule automobile, ou autoradio, permet de recevoir des programmes radiophoniques par la voie hertzienne. Des diffuseurs émettent ces programmes radiophoniques sous la forme de signaux radiofréquence (RF). Ces signaux RF sont modulés, d'une manière plus ou moins sophistiquée, par un signal dans la gamme des "audiofréquences" qui, en acoustique, désigne les signaux de fréquence comprise entre 20 Hz et 20 kHz, audibles par l'être humain.

Historiquement, les premiers signaux ainsi radiodiffusés sont des signaux analogiques, particulièrement en modulation d'amplitude (AM, mis pour « *Amplitude Modulation* » en anglais) en ondes longues ou GO (150 kHz-300 kHz) ou en ondes courtes ou PO (525 kHz-1605 kHz).

Puis, il a été introduit la modulation de fréquence (FM, mis pour « *Frequency Modulation* » en anglais), dans la bande II en VHF (87,5-108 MHz) ou dans bande 76-108 MHz au Japon).

Plus récemment, le format de radio numérique DAB+ (de l'anglais « *Digital Audio Broadcasting* », qui désigne la Radio Numérique Terrestre ou RNT) permet également aux diffuseurs d'ajouter des informations comme du texte, des images et même des vidéos. Les fréquences porteuses utilisées se trouvent la bande III en VHF (174-240 MHz). La modulation utilisée est la modulation par changement de phase (PSK, de l'anglais « *phase-shift keying* ») qui consiste à véhiculer de l'information binaire exclusivement via la phase d'un signal de référence (porteuse), avec le procédé de codage de signaux numériques par répartition en fréquences orthogonales sous forme de multiples sous-porteuses (OFDM, de l'anglais « *orthogonal frequency-division multiplexing* ») qui fournit une bonne immunité à l'atténuation et aux interférences inter-symboles causées par les trajets multiples.

Ainsi, quelle que soit la modulation analogique ou numérique, les informations sonores utiles sont reçues en étant portées par des signaux radiofréquence (RF) dans différentes bandes de fréquences. Ces signaux RF sont démodulés, c'est-à-dire que les informations sonores utiles sont ramenées en bande de base, par un tuner. Un tuner est ainsi un équipement chargé de la démodulation des signaux RF reçus sur différents canaux sélectionnables par l'utilisateur pour recevoir la station de son choix.

Les autoradios usuels comprennent au moins un tuner analogique AM/FM et au moins un tuner numérique DAB+. Dans les autoradios haut de gamme, des tuners supplémentaires sont chargés de la mise à jour des listes et de la recherche préalable des stations radiophoniques.

Par ailleurs, les autoradios plus récents intègrent souvent la technologie Bluetooth™ permettant l'usage de téléphones mobiles, par exemple la fonction mains libres ou la lecture de fichiers audio stockés dans le téléphone mobile du conducteur ou d'un passager. Bluetooth™ est une norme de communications permettant l'échange bidirectionnel de données à très courte distance en utilisant des ondes radio UHF dans les bandes de fréquences ISM, de l'anglais « *Industrial, Scientific and Médical* » (2400-2483,5 MHz) dont l'exploitation ne nécessite pas de licence administrative vu la faible puissance d'émission et le risque faible d'interférences. Ainsi, l'autoradio comprend un tuner radio numérique à 2,4 GHz, pour la démodulation d'un signal Bluetooth.

Les autoradios plus récents permettent aussi la connexion à Internet via un récepteur 3G/LTE/4G intégré, ou plus généralement via un partage de connexion en Wi-Fi (normes IEEE 802.11 et ISO/CEI 8802-11) avec par exemple le téléphone portable ou une tablette connectée du conducteur ou de l'un des passagers du véhicule. Un signal Wi-Fi est un signal radio dans la bande de fréquence radio SHF des 5 GHz (norme 802.11a, aussi baptisée Wi-Fi 5), ou dans la bande des ISM à 2,4 GHz. La modulation utilisée est adaptative, en fonction des conditions radio : BPSK, QPSK ou QAM. Ainsi, l'autoradio comprend un tuner radio numérique Wi-Fi, parfois désigné « tuner Internet ».

Par ailleurs, un récepteur GPS (de l'anglais « Global Positioning System ») d'un véhicule reçoit et démodule des signaux émis par des satellites sur deux fréquences L1 (1575,42 MHz) et L2 (1227,60 MHz) modulées en phase (BPSK, mis pour « *Binary Phase Shift Keying* ») par un ou plusieurs codes pseudo-aléatoires datés précisément et par un message de navigation. Compte tenu du partage, notamment, d'un écran d'affichage d'une interface homme-machine ou IHM (ou encore HMI, de l'anglais « Human-Machine Interface ») commune pour la restitution d'informations à l'utilisateur, le système GPS et l'autoradio font partie d'un même système multimédia dans les véhicules automobiles récents.

En résumé, les véhicules automobiles récents comprennent plusieurs chaînes de réception radio, avec des tuners analogiques et numériques adaptés pour recevoir des programmes radiophoniques, mais également des récepteurs Bluetooth et Wi-Fi, et d'autres encore comme des récepteurs GPS etc. pour supporter la réception d'informations qui vont bien au-delà des programmes radiophoniques, et qui font de l'autoradio un véritable combiné multimédia pour le divertissement, les communications (voix et données) et la navigation.

Une chaîne de réception radio comprend une antenne de réception, suivie d'un amplificateur de réception qui est couplé au tuner via un câble.

### Art Antérieur

Dans l'art existant, une validation du montage est faite par le tuner en effectuant une détection de circuit ouvert / circuit fermé en courant continu, permettant de valider la bonne connexion du tuner, du câble et de l'amplificateur. Cependant, la bonne connexion de l'antenne n'est pas vérifiée, et les performances radio de toute la chaine ne sont pas vérifiées.

Les document CA 2204679 et WO 200889574 divulguent des procédés d'autotest par des dispositifs comportant un émetteur radiofréquence, mais ces autotest ne sont pas commandés par le tuner/démodulateur.

Le document US 2001/046845 décrit un dispositif récepteur pour recevoir des signaux radio modulés en fréquence et des procédés d'adaptation et de test d'une branche de réception du dispositif récepteur. Le document US 2016/087734 divulgue un dispositif récepteur RF comprenant une puce à semi-conducteur dans un boîtier de puce et un générateur de signal de test intégré à la puce. Le document US 3 605 022 divulgue un équipement d'autotest pour un récepteur à modulation de fréquence comprenant un générateur d'impulsions riche en harmoniques et ayant une fréquence de répétition choisie de telle sorte que la fréquence fondamentale soit sensiblement égale à l'espacement des canaux du récepteur FM en cours de test.

### Résumé de l'Invention

L'invention est définie par les revendications annexées. L'invention propose un procédé d'autotest d'une chaîne de réception radiofréquence d'un véhicule automobile comprenant une antenne de réception suivie d'un amplificateur de réception, ainsi qu'un démodulateur couplé à l'amplificateur de réception par un câble radiofréquence, ledit procédé comprenant :
- l'activation d'une source radiofréquence sous la commande du démodulateur, la source radiofréquence comprenant un émetteur radiofréquence interne au démodulateur ou une source parasite au sein d'un équipement du véhicule automobile contrôlable par le démodulateur, pour l'émission d'un signal radiofréquence de test avec une ou plusieurs harmoniques de niveaux respectifs sensiblement connus dans la bande de fréquence de travail du démodulateur, ledit signal radiofréquence de test étant apte à être reçu par l'antenne de réception ;
- la détermination par le démodulateur de la performance radio de la chaîne de réception radiofréquence en amont du démodulateur, sur la base de l'effet sur la réception radio par ladite chaîne de réception radiofréquence, des harmoniques du signal radiofréquence de test qui sont reçues par l'antenne de réception et conduites par la chaîne de réception jusqu'au démodulateur.

Grâce à l'invention, il est possible de d'effectuer un autotest de la chaîne de réception radiofréquence complète en utilisant un signal radio connu (parasite ou non) généré par le véhicule lui-même. On réalise ainsi un test de la performance radio de la chaine de réception totale, et non plus uniquement une couverture partielle de la chaîne en courant continu, comme c'est le cas dans l'art existant.

Des modes de réalisation pris isolément ou en combinaison, prévoient en outre que :
- la source radiofréquence émettant le signal radiofréquence de test peut comprendre un émetteur radiofréquence interne au démodulateur, qui est adapté pour générer un ou plusieurs harmoniques dans la bande de fréquence de travail du tuner ;
- l'émetteur radiofréquence peut comprendre un oscillateur générant un signal radiofréquence ayant une harmonique principale à une fréquence donnée et des harmoniques secondaires à des fréquences multiples de la fréquence de l'harmonique principale ;
- l'émetteur radiofréquence peut comprendre en outre des moyens d'étalement de spectre pour étaler le spectre du signal radiofréquence généré par l'oscillateur ;
- la source radiofréquence émettant le signal radiofréquence de test peut être une source parasite au sein d'un équipement du véhicule automobile contrôlable par le tuner, qui est adaptée pour générer le signal radiofréquence de tests avec une ou plusieurs harmoniques dans la bande de fréquence de travail du tuner ;
- la source parasite peut être un câble reliant le démodulateur à un écran d'affichage d'une interface homme-machine du véhicule automobile, le démodulateur causant alors l'émission du signal radiofréquence de test par ledit câble en commandant l'affichage d'une image déterminée sur ledit écran d'affichage ;
- l'équipement du véhicule automobile incorporant la source parasite peut être un équipement comme un troisième feu-stop surélevé ou une caméra de recul, agencé à l'arrière du véhicule près de l'antenne de réception qui est agencée dans la lunette arrière ou dans une vitre latérale de custode arrière du véhicule automobile, le démodulateur causant alors l'émission du signal radiofréquence de test par ladite source parasite en commandant le fonctionnement dudit équipement.

Dans un second aspect, l'invention concerne également un produit programme d'ordinateur comprenant des instructions qui, lorsque le programme est exécuté par un calculateur, conduisent celui-ci à mettre en œuvre toutes les étapes du procédé selon le premier aspect ci-dessus. Le produit programme d'ordinateur comprend une ou plusieurs séquences d'instructions stockées sur un support de mémoire lisible par une machine comprenant un processeur du calculateur.

Dans un troisième aspect, l'invention a également pour objet un démodulateur radiofréquence comprenant des moyens pour la mise en œuvre du procédé selon le premier aspect.

Un quatrième et dernier aspect de l'invention concerne enfin un véhicule automobile comprenant une chaîne de réception radiofréquence avec un démodulateur radiofréquence selon le troisième aspect ci-dessus.

### Brève Description des Dessins

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma montrant l'interface homme-machine d'un autoradio, selon un exemple d'implantation dans un véhicule automobile ;
- la figure 2 est un fonctionnel des principaux éléments d'une chaîne de réception RF à laquelle le procédé d'autotest peut être appliqué ;
- la figure 3 illustre un exemple de mise en œuvre d'une technique d'autotest selon l'art antérieur, appliqué à la chaîne de réception de la figure 1 ;
- la figure 4 illustre la mise en œuvre du procédé d'autotest selon l'invention, appliqué à la chaîne de réception de la figure 1 ;
- la figure 5 est un diagramme d'étapes illustrant des modes de mise en œuvre du procédé selon l'invention ; et,
- la figure 6 est une représentation schématique de l'arrière d'un véhicule automobile, montrant un exemple d'implantation d'équipements du véhicule qui peut être utilisés dans la mise en œuvre du procédé d'autotest.

### Description détaillée de modes de réalisation

Dans la description de modes de réalisation qui va suivre et dans les Figures des dessins annexés, les mêmes éléments ou des éléments similaires portent les mêmes références numériques aux dessins.

Des modes de mise en œuvre de l'invention vont être décrits, dans ce qui suit, dans le contexte non limitatif d'une chaîne de réception radio d'un autoradio de véhicule automobile. L'invention n'entend pas être limitée, toutefois, à cet exemple. Elle s'applique à l'autotest de toute chaîne de réception radio présente dans le véhicule.

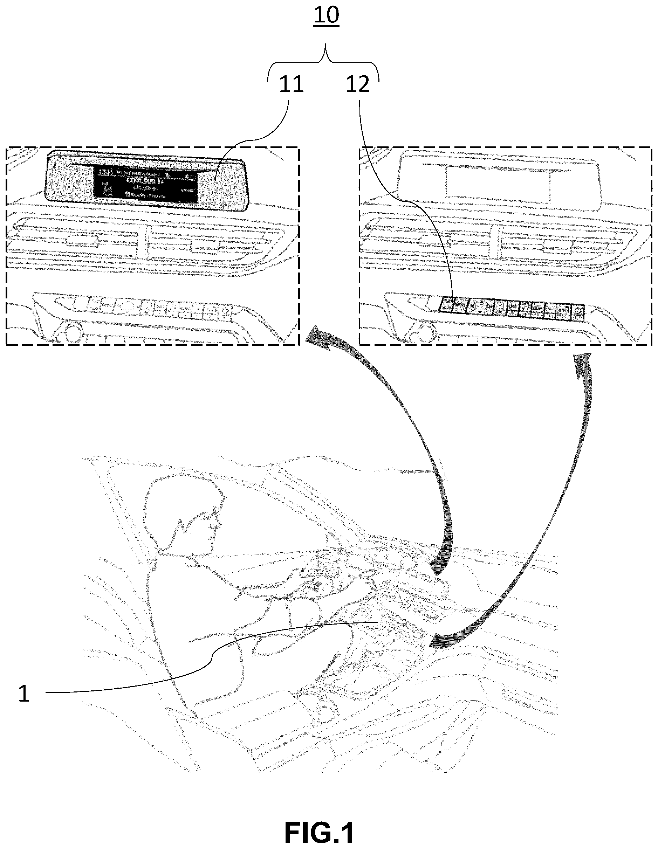

La **figure** 1 montre un autoradio 1 disposé au niveau de la planche de bord du véhicule automobile. L'autoradio 1 comprend une interface homme-machine 10, ou IHM (ou encore HMI, de l'anglais « *Human-Machine Interface* ») avec un écran d'affichage 11 et des boutons de commande et de réglage 12.

Les boutons 12 sont disposés de manière à pouvoir être actionnés à la main sans effort par le conducteur, et l'écran 11 est disposé de manière à être visible par le conducteur. L'écran 11 est utilisé pour afficher, par exemple, les canaux disponibles, le titre et d'autres informations relatives aux programmes radiophoniques en cours d'écoute à ou à écouter à la suite, des messages pour le réglage et la configuration de l'autoradio 1, etc. Il s'agit généralement d'un écran multifonction, donc utilisé pour d'autre fonctions comme la navigation GPS, l'utilisation du téléphone, la navigation sur Internet, etc.

Les autoradios les plus récents disposent ainsi de trois chaînes de réception radio, c'est-à-dire de trois tuners radio : analogique AM/FM, numérique DAB+ et numérique Internet pour la réception Wi-Fi de programmes des diffuseurs qui sont diffusés par Internet.

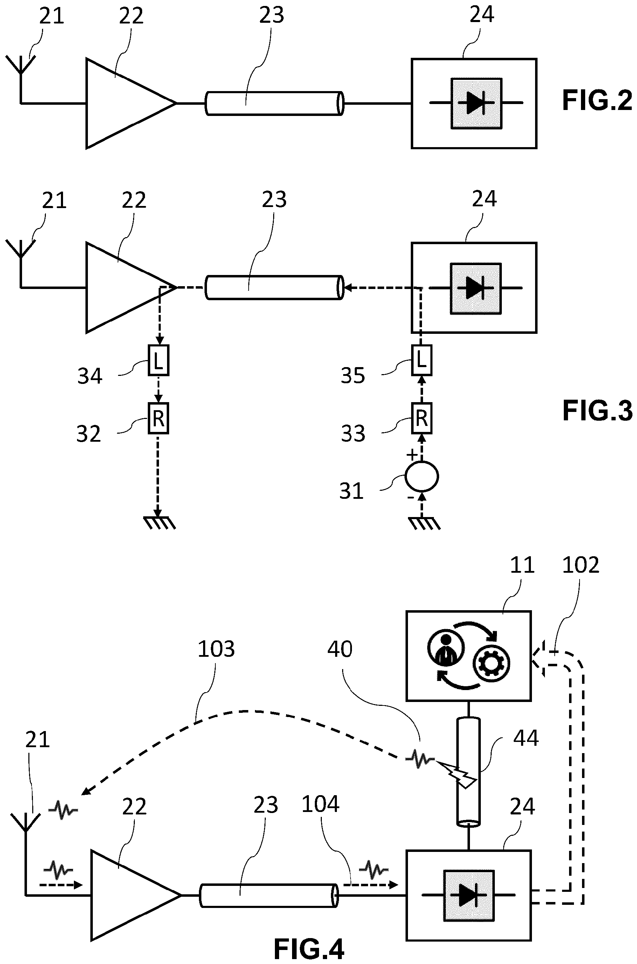

En référence au schéma fonctionnel de la **figure 2****,** une chaîne de réception radiofréquence d'un véhicule automobile comprend une antenne de réception 21 adaptée pour capter des signaux hertziens dans le domaine radiofréquence. L'antenne attaque un amplificateur de réception 22, qui est adapté pour amplifier le signal radiofréquence capté par l'antenne 21. Le cas échéant, l'amplification est limitée à certaines bandes de fréquence correspondant à des canaux sélectionnables par l'utilisateur, et l'énergie présente dans le spectre radiofréquence du signal reçu qui se trouve en dehors desdites bandes de fréquence est au contraire rejetée. La chaîne radiofréquence comprend encore un démodulateur 24, ou tuner. Le tuner 24 est couplé à la sortie de l'amplificateur de réception 22 par un câble radiofréquence 23, pour recevoir le signal radiofréquence reçu par l'antenne 21 et amplifié par l'amplificateur 22.

L'amplificateur de réception est situé au plus près de l'antenne de réception afin d'augmenter le rapport signal/bruit (S/N) le plus en amont possible. Selon les contraintes d'implantation de l'antenne et du tuner dans le véhicule, le câble radiofréquence peut avoir une longueur non négligeable. Par exemple, le tuner est généralement logé dans l'autoradio au niveau de la planche de bord du véhicule, donc plutôt à l'avant du véhicule, alors que l'antenne est généralement agencée dans une vitre à l'arrière du véhicule où elle est mieux protégée, à la fois des impacts et des perturbations électromagnétiques générées par les organes du véhicule qui se trouvent majoritairement à l'avant.

Lors de l'installation dans le véhicule du système incorporant la chaîne de réception, à savoir un autoradio dans l'exemple considéré ici, laquelle installation est réalisée en usine d'assemblage du véhicule, un test de validation du montage de la chaîne de réception est généralement effectué.

Habituellement, ce test de validation est fait par le tuner lui-même (et c'est pourquoi on parle d'autotest) en effectuant une détection des défauts les plus courants, de type « circuit ouvert » ou « court-circuit », en courant continu.

En référence au schéma fonctionnel de la **figure 3****,** l'autotest selon cet art antérieur consiste à injecter un courant continu du côté du tuner 24 grâce à une source de tension continu 31, une résistance de choc 33 et une inductance de choc 35 montés en série, le courant continu ainsi injecté étant évacué vers la masse du côté de l'amplificateur 22 par l'intermédiaire d'une inductance de choc 34 et d'une résistance de choc 32 montées en série. Le passage du courant continu signifie une connexion correcte des éléments traversés. Ainsi, cet autotest permet de valider la bonne connexion du tuner, du câble et de l'amplificateur (absence de circuit ouvert, et absence de court-circuit à la masse par exemple).

Cependant, la bonne connexion de l'antenne n'est pas vérifiée, et les performances radiofréquence de toute la chaîne de réception radiofréquence ne sont pas vérifiées. Or, bien d'autres défauts de montage peuvent affecter ces performances, par exemple :
- un connecteur de raccordement du câble radiofréquence 23 assurant certes la continuité de passage du courant continu, mais offrant des performances insatisfaisantes aux fréquences radio du fait d'une rupture d'impédance qui génère des réflexions le long du câble radiofréquence 23 ;
- un câble radiofréquence « pincé » à certains endroits de son parcours dans le véhicule, laissant certes passer le courant continu, mais offrant des performances RF dégradées,
- un amplificateur 22 n'ayant pas le bon gain aux bonnes fréquences ;
- etc.

Le procédé d'autotest selon des modes de mise en œuvre de l'invention permet de pallier cet inconvénient du procédé d'autotest de l'art antérieur qui vient d'être décrit ci-dessus

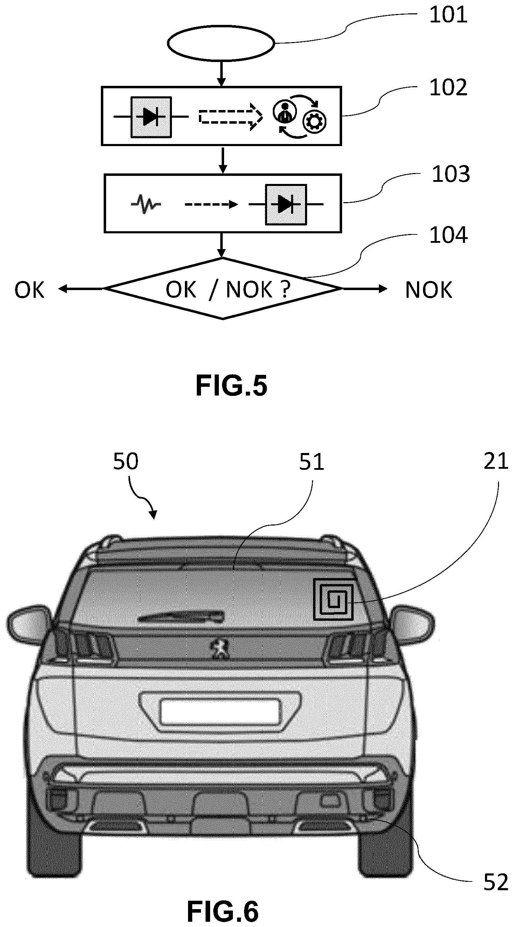

Des exemples de mise en œuvre du procédé vont maintenant être décrits en référence au schéma fonctionnel de la **figure 4** et au diagramme d'étapes de la **figure 5****.**

L'autotest est réalisé par le tuner lui-même, et peut être initié en usine, en fin de chaîne d'assemblage du véhicule par exemple. L'initiation de l'autotest porte la référence 101 dans le diagramme d'étapes de la figure 5.

En 102, le tuner 24 commande l'activation d'une source radiofréquence. Cette activation cause l'émission d'un signal radiofréquence de test 40, qui peut être un signal parasite ou pas, avec une ou plusieurs harmoniques de niveaux respectifs sensiblement connus. Cette connaissance a priori des harmoniques du signal de test 40 provient de la calibration du dispositif réalisé en amont, en laboratoire et/ou sur un véhicule d'essai. Les harmoniques du signal de test se trouvent dans la bande de fréquence de travail du tuner.

Le signal de test 40 est apte à être reçu par l'antenne de réception. Ceci veut dire notamment que la source radiofréquence le générant n'est pas trop éloignée de l'antenne, et/ou que le rayonnement du signal de test 40 vers l'antenne n'est pas gêné par des obstacles électromagnétiques susceptible de faire écran à cette propagation en champ libre.

En 103 le signal de test 40 est alors reçu par l'antenne de réception 21 de la chaîne de réception radiofréquence sous test. Les harmoniques du signal de test 40 sont amplifiées par l'amplificateur radiofréquence 23 et sont conduites par la chaîne de réception jusqu'au tuner 24.

En 104, le tuner 24 détermine la performance radio de la chaîne de réception radiofréquence en amont (comprenant l'antenne 21, l'amplificateur 22 et le câble radiofréquence 23), sur la base de l'effet sur la réception radio par ladite chaîne de réception radiofréquence, des harmoniques du signal radiofréquence de test 40 qui sont reçues par l'antenne de réception.

Ainsi, l'autotest embrasse la chaîne de réception radiofréquence complète, en utilisant un signal radio connu (parasite ou non) généré par le véhicule lui-même. On réalise ainsi un test de la performance radio de la chaine de réception totale, et non plus uniquement une couverture partielle de la chaîne en courant continu, comme c'est le cas dans l'art existant.

Dans des modes de mise en œuvre, la source radiofréquence émettant le signal radiofréquence de test 40 peut comprendre un émetteur radiofréquence interne au démodulateur, qui est adapté pour générer une ou plusieurs harmoniques dans la bande de fréquence de travail du tuner.

Il peut s'agit d'un petit oscillateur dédié (non représenté aux dessins), capable de générer un signal radiofréquence ayant une harmonique principale à une fréquence donnée et des harmoniques secondaires à des fréquences multiples de la fréquence de l'harmonique principale et tombant dans la bande de fréquence de travail du tuner. Un tel émetteur radiofréquence peut comprendre en outre des moyens d'étalement de spectre pour étaler le spectre du signal radiofréquence généré par l'oscillateur. L'étalement de spectre utilise généralement une séquence pseudo aléatoire créée par une porte logique XOR (à savoir une porte OU exclusif) pour étaler le signal de bande étroite en un signal de relative large-bande. Le récepteur récupère le signal original en corrélant le signal reçu avec une réplique de cette séquence pseudo aléatoire.

De préférence, toutefois, on tire profit de l'existence de moyens déjà présents dans le tuner 23, comme une alimentation à découpage (non représentée aux dessins) fonctionnant par exemple à 1 MHz, dont la centième harmonique tombe dans la bande FM, par exemple.

Dans d'autres exemple de mise en œuvre, la source radiofréquence émettant le signal radiofréquence de test peut être une source parasite au sein d'un équipement du véhicule automobile contrôlable par le tuner, qui est adaptée pour générer le signal radiofréquence de tests avec une ou plusieurs harmoniques dans la bande de fréquence de travail du tuner.

Ainsi, par exemple, dans l'exemple montré à la figure 4 la source parasite peut être un câble 44 reliant le démodulateur 24 à l'écran d'affichage 11 de l'interface homme-machine 10 du véhicule automobile qui a été présentée plus haut en référence à la figure 1. Dans ce cas, le démodulateur 24 cause l'émission du signal radiofréquence de test 40 par le câble 44 en commandant (étape 102) l'affichage d'une image déterminée sur l'écran d'affichage 11. On notera que l'image affiché peut être spécifique choisie pour que le contenu fréquentiel du signal de test 40 fuitant du câble 44 présente des harmoniques se prêtant bien au test de la chaîne de réception. Une telle image peut avoir été conçue spécialement et/ou sélectionnée lors d'une phase de caractérisation préalable, pendant la conception du système.

A tout le moins, le câble 44 reliant le tuner 24 à l'écran d'affichage 11 transporte une horloge à 33.33 MHz, dont l'harmonique 3 (à 99,99 MHz) tombe dans la bande FM du tuner, et dont l'harmonique 6 (à 199,99 MHz) tombe dans la bande DAB du tuner. La détection du niveau de ces harmoniques par le tuner permet de valider de manière autonome la bonne installation des différents composants de la chaîne de réception, y-compris de l'antenne 21 contrairement aux autotests de l'art antérieur.

En variante, le tuner peut effectuer une mesure de performance de la réception d'un signal radiofréquence avant et après la mise en route de l'écran. En observant l'impact du niveau des harmoniques du signal de test 40 lors de la mise en route de l'écran, le tuner est capable de valider que la chaîne radio totale (antenne 21, amplificateur 22, et câble 23) offre les performances voulues. Les performances dont il s'agit ici peuvent être une mesure de niveau de signal reçu (ou SSI, de l'anglais « *Signal Strengh Indicator* ») pour un tuner FM, ou un taux d'erreur sur les bits (ou BER, de l'anglais « *Bit Error Rate* ») pour un tuner DAB.

L'homme du métier appréciera qu'une caractérisation préalable, réalisée véhicule par véhicule, permet de définir les niveaux de seuil d'acceptation selon les besoins et contraintes propres à chaque véhicule.

Dans d'autres exemples de mise en œuvre, l'équipement du véhicule automobile incorporant la source parasite peut être un équipement électrique standard du véhicule. En effet, tout équipement électrique génère des perturbations électromagnétiques, qui peuvent constituer un signal radiofréquence de test de la chaîne de réception.

En référence à la **figure 6****,** un tel équipement électrique peut être le troisième feu-stop surélevé 51 ou une caméra de recul 52, par exemple. L'avantage de ces exemples est qu'il s'agit d'équipements agencés à l'arrière du véhicule 50 près de l'antenne de réception 21 qui est généralement agencée dans vitre de la lunette arrière, ou bien dans une vitre latérale de custode arrière du véhicule. Le tuner 24 cause alors l'émission du signal radiofréquence de test 40 par une telle source parasite en commandant le fonctionnement de l'équipement correspondant. Il est bien évident que l'invention n'entend pas être limitée à ces exemple, et que bien d'autres équipements électriques standard du véhicule 50 peut être utilisés comme source du signal radiofréquence de test, en fonction notamment de la localisation de l'antenne de réception 21 de la chaîne de réception radiofréquence à tester. Les exemples ci-dessus ne sont donnés uniquement parce que les antennes sont généralement implantées sur une vitre à l'arrière du véhicule, soit la vitre de la lunette arrière en plus des résistances chauffantes, soit une des vitres latérales de custode.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

En particulier, l'invention ne se limite pas à l'autotest des chaînes de réception de l'autoradio d'un véhicule automobile, mais concerne toute chaîne de réception radio comme le Wi-Fi, le GPS, la 2G/3G/4G, etc.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Procédé d'autotest d'une chaîne de réception radiofréquence d'un véhicule automobile (50) comprenant une antenne de réception (21) suivie d'un amplificateur de réception (22), ainsi qu'un démodulateur (24) couplé à l'amplificateur de réception par un câble radiofréquence (23), ledit procédé comprenant :
- l'activation (102) d'une source radiofréquence sous la commande du démodulateur, la source radiofréquence comprenant un émetteur radiofréquence interne au démodulateur ou une source parasite au sein d'un équipement du véhicule automobile contrôlable par le démodulateur, pour l'émission d'un signal radiofréquence de test avec une ou plusieurs harmoniques de niveaux respectifs sensiblement connus dans la bande de fréquence de travail du démodulateur, ledit signal radiofréquence de test étant apte à être reçu par l'antenne de réception ;
- la détermination (104) par le démodulateur de la performance radio de la chaîne de réception radiofréquence en amont du démodulateur, sur la base de l'effet sur la réception radio par ladite chaîne de réception radiofréquence, des harmoniques du signal radiofréquence de test qui sont reçues par l'antenne de réception et conduites (103) par la chaîne de réception jusqu'au démodulateur.

2. Procédé selon la revendication 1, dans lequel la source radiofréquence comprend l'émetteur radiofréquence interne au démodulateur et dans lequel l'émetteur radiofréquence comprend un oscillateur générant un signal radiofréquence ayant une harmonique principale à une fréquence donnée et des harmoniques secondaires à des fréquences multiples de la fréquence de l'harmonique principale.

3. Procédé selon la revendication 2, dans lequel l'émetteur radiofréquence comprend en outre des moyens d'étalement de spectre pour étaler le spectre du signal radiofréquence généré par l'oscillateur.

4. Procédé selon la revendication 1, dans lequel la source radiofréquence comprend la source parasite et dans lequel la source parasite est un câble (44) reliant le démodulateur à un écran d'affichage (11) d'une interface homme-machine (10) du véhicule automobile, et dans lequel le démodulateur cause l'émission du signal radiofréquence de test par ledit câble en commandant l'affichage d'une image déterminée sur ledit écran d'affichage.

5. Procédé selon la revendication 1, dans lequel la source radiofréquence comprend la source parasite et dans lequel l'équipement du véhicule automobile incorporant la source parasite est un équipement électrique comme un troisième feu-stop surélevé (51) ou une caméra de recul (52), agencé à l'arrière du véhicule près de l'antenne de réception qui est agencée dans la lunette arrière ou dans une vitre latérale de custode arrière du véhicule automobile, et dans lequel le démodulateur cause l'émission du signal radiofréquence de test par ladite source parasite en commandant le fonctionnement dudit équipement.

6. Produit programme d'ordinateur comprenant des instructions qui, lorsque le programme est exécuté par un calculateur, conduisent celui-ci à mettre en œuvre toutes les étapes du procédé selon l'une quelconque des revendications 1 à 5.

7. Démodulateur radiofréquence (24) comprenant des moyens pour la mise en œuvre du procédé selon l'une quelconque des revendications 1 à 5.

8. Véhicule automobile (50) comprenant une chaîne de réception radiofréquence avec un démodulateur radiofréquence selon la revendication 7.

## Patentansprüche

1. Verfahren zum Selbsttest eines Kraftfahrzeug-Hochfrequenz-Empfangssystems (50), das eine Empfangsantenne (21), gefolgt von einem Empfangsverstärker (22), und einen Demodulator (24) umfasst, der mit dem Empfangsverstärker durch ein Hochfrequenzkabel (23) gekoppelt ist, wobei das Verfahren umfasst:
Aktivieren (102) einer Funkfrequenzquelle unter der Steuerung des Demodulators, wobei die Funkfrequenzquelle einen Funkfrequenzsender innerhalb des Demodulators oder eine parasitäre Quelle innerhalb einer durch den Demodulator steuerbaren Ausrüstung des Kraftfahrzeugs umfasst, um ein Test-Funkfrequenzsignal mit einer oder mehreren Oberwellen mit jeweils im Wesentlichen bekannten Pegeln im Arbeitsfrequenzband des Demodulators zu senden, wobei das Test-Funkfrequenzsignal geeignet ist, von der Empfangsantenne empfangen zu werden;
Bestimmen (104) der Funkleistung der Hochfrequenz-Empfangskette vor dem Demodulator durch den Demodulator, basierend auf der Auswirkung der Oberwellen des Test-Hochfrequenzsignals, die von der Empfangsantenne empfangen und durch die Empfangskette zum Demodulator geleitet (103) werden, auf den Funkempfang durch die Hochfrequenz-Empfangskette

2. Verfahren nach Anspruch 1, wobei die Hochfrequenzquelle den Hochfrequenzsender innerhalb des Demodulators umfasst und wobei der Hochfrequenzsender einen Oszillator umfasst, der ein Hochfrequenzsignal mit einer Hauptoberschwingung bei einer gegebenen Frequenz und Nebenoberschwingungen bei Frequenzen, die ein Vielfaches der Frequenz der Hauptoberschwingung sind, erzeugt.

3. Verfahren nach Anspruch 2, wobei der Hochfrequenzsender weiterhin Spektrumspreizmittel zum Spreizen des Spektrums des von dem Oszillator erzeugten Hochfrequenzsignals umfasst.

4. Verfahren nach Anspruch 1, wobei die Hochfrequenzquelle die parasitäre Quelle umfasst und wobei die parasitäre Quelle ein Kabel (44) ist, das den Demodulator mit einem Anzeigeschirm (11) einer Mensch-Maschine-Schnittstelle (10) des Kraftfahrzeugs verbindet, und wobei der Demodulator bewirkt, dass das Test-Hochfrequenzsignal durch das Kabel ausgesendet wird, indem er die Anzeige eines bestimmten Bildes auf dem Anzeigeschirm steuert.

5. Verfahren nach Anspruch 1, wobei die Hochfrequenzquelle die parasitäre Quelle umfasst und wobei die Ausrüstung des Kraftfahrzeugs, die die parasitäre Quelle enthält, eine elektrische Ausrüstung ist, wie z.B. eine dritte hoch montierte Bremsleuchte (51) oder eine Rückfahrkamera (52), die am Heck des Fahrzeugs in der Nähe der Empfangsantenne angeordnet ist, die in der Heckscheibe oder in einem hinteren Viertelfenster des Kraftfahrzeugs angeordnet ist, und wobei der Demodulator bewirkt, dass das Test-Hochfrequenzsignal von der parasitären Quelle durch Steuern des Betriebs der Ausrüstung ausgesendet wird.

6. Computerprogrammprodukt, das Anweisungen enthält, die, wenn das Programm von einem Computer ausgeführt wird, den Computer veranlassen, alle Schritte des Verfahrens nach einem der Ansprüche 1 bis 5 durchzuführen.

7. Hochfrequenzdemodulator (24) mit Mitteln zur Durchführung des Verfahrens nach einem der Ansprüche 1 bis 5.

8. Kraftfahrzeug (50) mit einer Hochfrequenz-Empfangskette mit einem Hochfrequenz-Demodulator nach Anspruch 7.

## Claims

1. A method of self-testing a motor vehicle radio frequency reception chain (50) comprising a reception antenna (21) followed by a reception amplifier (22), and a demodulator (24) coupled to the reception amplifier by a radio frequency cable (23), said method comprising :
activating (102) a radio frequency source under the control of the demodulator, the radio frequency source comprising a radio frequency transmitter internal to the demodulator or a parasitic source within a motor vehicle equipment controllable by the demodulator, for the transmission of a test radio frequency signal with one or more harmonics of respective substantially known levels in the working frequency band of the demodulator, said test radio frequency signal being adapted to be received by the receiving antenna;
determining (104) by the demodulator the radio performance of the radio frequency receiving chain upstream of the demodulator, based on the effect on radio reception by said radio frequency receiving chain, of the harmonics of the test radio frequency signal which are received by the receiving antenna and conducted (103) through the receiving chain to the demodulator.

2. The method of claim 1, wherein the radio frequency source comprises the radio frequency transmitter internal to the demodulator and wherein the radio frequency transmitter comprises an oscillator generating a radio frequency signal having a main harmonic at a given frequency and secondary harmonics at frequencies multiple of the frequency of the main harmonic.

3. The method of claim 2, wherein the radio frequency transmitter further comprises spectrum spreading means for spreading the spectrum of the radio frequency signal generated by the oscillator.

4. A method according to claim 1, wherein the radio frequency source comprises the interference source and wherein the interference source is a cable (44) connecting the demodulator to a display screen (11) of a man-machine interface (10) of the motor vehicle, and wherein the demodulator causes the test radio frequency signal to be emitted through said cable by controlling the display of a determined image on said display screen.

5. The method according to claim 1, wherein the radio frequency source comprises the interference source and wherein the equipment of the motor vehicle incorporating the interference source is electrical equipment such as a third high-mounted stop lamp (51) or a rear view camera (52), arranged at the rear of the vehicle near the receiving antenna which is arranged in the rear window or in a rear quarter window of the motor vehicle, and wherein the demodulator causes the emission of the test radio frequency signal by said interference source by controlling the operation of said equipment.

6. A computer program product comprising instructions which, when the program is executed by a computer, cause the computer to implement all the steps of the method according to any of claims 1 to 5.

7. A radio frequency demodulator (24) comprising means for implementing the method of any one of claims 1 to 5.

8. A motor vehicle (50) comprising a radio frequency receiving chain with a radio frequency demodulator according to claim 7.
